(19) Europäisches Patentamt
European Patent Office
Office européen des brevets

(11) **EP 2 228 678 A1**

(12) **EUROPEAN PATENT APPLICATION**

(43) Date of publication:
**15.09.2010 Bulletin 2010/37**

(51) Int Cl.:
*G02B 27/22* (2006.01)    *H04N 13/00* (2006.01)

(21) Application number: **09151124.6**

(22) Date of filing: **22.01.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(71) Applicant: **Koninklijke Philips Electronics N.V.**<br>**5621 BA Eindhoven (NL)** | (72) Inventor: **The designation of the inventor has not yet been filed**<br><br>(74) Representative: **Damen, Daniel Martijn**<br>**Philips**<br>**Intellectual Property & Standards**<br>**P.O. Box 220**<br>**5600 AE Eindhoven (NL)** |

(54) **Display device with displaced frame perception**

(57)    The present invention relates to a frame device or display device and a method for creating a floating display or enhancing 3D experience at borders of a display, wherein a 3D lenticular sheet or other light directing structure is added on the frame of the display such that the frame of the display appears to be at a different position in front of or behind the display. Thereby, the artifact that depth impression on a 3D display disappears when the 3D content touches the frame of the display can be reduced or the impression of a thin floating display can be achieved.

Fig. 1

**Description**

FIELD OF THE INVENTION

The present invention relates to a display device, a detachable autostereoscopic unit and the use of a detachable autostereoscopic unit on a display device.

BACKGROUND OF THE INVENTION

There are various cues that a human being uses to interpret a sequence or an image in order to determine the actual location of an object in a scene. Such cues are helpful to determine the actual location, hence the distance from the viewer, to the object, and can be divided into monocular and binocular cues. To the latter one belong retinal disparity, accommodation and convergence. To the monocular cues belong motion, defocus, linear perspective, occlusion, shading, relative sizes, etc. When these cues conflict with each other, the perceived depth will be lessened. In a three-dimensional (3D) display device, this problem typically occurs at the transition from a display to a frame surrounding the display. 3D content that is rendered on a 3D display and that should pop out of the display will appear to be sticking to the frame of the display, because it appears "occluded" by the display frame.
Furthermore, a lot of effort has been spent by manufacturers of displays and flat television devices on reducing perceived thickness. Because the related products are in general observed from the front side or at an angle from the front side, the thickness of the middle part of the product is hardly noticed. Due to this, manufacturers focus on reducing the thickness of peripheral areas. To realize this, electronic parts located at the edge of the products are made thinner or removed. If needed, separate electronic boxes are added which are linked to the display via a cable or by a wireless connection. Finally, also the thickness of a display unit itself is reduced e.g. by using thinner backlights (in case of liquid crystal display (LCD) technology), or by replacing the display technology by a thinner technology (such as OLED).
However, so far changes needed to reduce the perceived thickness required the use of expensive materials, and affected rigidity, serviceability and also performance and lifetime of the product.

SUMMARY OF THE INVENTION

It is an object of the present invention to provide a display device, by means of which perceived thickness of a display area can be reduced and/or perceived depth of 3D content in the display area can be enhanced.
This object is achieved by a display device as claimed in claim 1, by a detachable autostereoscopic unit for use with a display device as claimed in claim 14 and by the use of a detachable autostereoscopic unit as claimed in claim 14 in combination with a display device.
Accordingly, by enhancing the non-display area using autostereoscopic means, at least two views may be provided to spatially distinct regions in front of the display device and in areas left and right of the front of the display device. As a result an observer perceiving two of the at least two views with his/her respective left and right eye will no longer perceive the non-display area to be located at its physical location, but instead will perceive it to be located at a location displaced substantially perpendicular to the display area. In this manner an impression may be created that the non-display area is located either behind or in front of the display area. This virtual shift of the non-display area can be used to solve the above problems at reduced technological effort. If the non-display area appears to be not in the same plane as the display area, sticking of a 3D content to the frame of the display can be reduced and/or the display area can be perceived as a thin floating display above the non-display area so that the thickness of the display device or frame device virtually disappears.
The actual choice to displace the perceived position towards the viewer or away from the view is dependent on the problem addressed. When addressing the problem associated with 3D autostereoscopic displays (i.e. that objects "stick" to the display frame boundaries), the perceived location of the non-display area is preferably shifted towards the viewer. More preferably the displacement is chosen such that the location of the non-display area is chosen to be identical to or closer to the observer than the perceived location of objects presented on the 3D autostereoscopic display device. As generally the maximum depth representation of a 3D autostereoscopic display devices is limited to a particular depth range this depth range may be used to determine the preferred displacement of the non display area. The actual perceived displacement is the result of the interaction of the composite image and the light directing means as will be discussed hereinafter.
On the other hand when the perceived depth of the display device of either a 2D or a 3D autostereoscopic display device is to be reduced, the displacement direction should be chosen such that the non-display area of the display device is perceived as being located further away from the observer. More preferably, the light directing means are configured to provide the at least two views in a manner so that the non-display area appears displaced towards the back of the display area. In this case, the display area appears in front of the non-display area and an impression is created as if a thin "display sheet" is floating within or above the display device.

As will be clear to those skilled in the art, it is the composite image comprising the at least interleaved views in combination with the light directing means that effectively provide the proper depth perception. The composite image e.g. in case of a lenticular display interleaves respective views on a per pixel or even subpixel basis so as to provide viewers the views. By providing the views for the respective left and right eyes which comprise information corresponding to the border of the non-display area being located behind, or in front of the display area the perception of the location of the non display area can be guided.

According to a first aspect which can be combined with any of the above aspects, preferably the views correspond to left eye and right eye views, of a particular texture or pattern. This enables guidance of the visual system of observers to properly interpret the location of the non-display area, while not distracting too much from the display area.

According to another aspect which can be combined with any of the above aspects, the light directing means may comprise one of a lenticular foil and a parallax barrier. In a specific implementation example, the composite image and lenticular foil may be semi-transparent and may be mounted on a light emitting portion. Thereby, the proposed effect can be combined with other illuminating effects generated in at least a frame portion of a display device.

According to a further aspect, used when attempting to reduce the perceived thickness of the display device, mirrors may be provided at side portions of the display device. These mirrors provide the advantage that side portions of the housing or body of the display device are less visible.

According to a still further aspect used when attempting to reduce the perceived thickness of the display device, extended backplane portions can be arranged in a plane substantially parallel to said non-display area and extending beyond said non-display area, wherein the plane is displaced in the direction substantially perpendicular to the display area by an amount at least substantially equal to the amount by which the non-display area appears displaced as a result of the light directing means. Thereby, an impression can be generated that the virtually displaced image of the non-display area and the extended backplane belong to the same part of the display device. In a more specific implementation example, the extended background portions may comprise a pattern at least substantially equal to a pattern which appears on the displaced non-display area. This prevents appearing/disappearing of parts of the pattern at the outer boundary of the non-display area when a viewer moves.

According to a still further aspect used when attempting to reduce the perceived thickness of the display device, the display device may comprise cover portions for covering areas of the non-display area, in which the direction of patterns of the light directing means changes. These cover portions can prevent non-realistic effects created by the changed directions of the patterns.

According to a still further aspect used of the invention, the autostereoscopic means are formed as a detachably mounted autostereoscopic unit and are further provided with attachment means for detachably mounting the detachable autostereoscopic unit to the display device.

Further advantageous developments are defined in the dependent claims.

BRIEF DESCRIPTION OF THE DRAWINGS

The present invention will now be described based on various embodiments with the reference to the accompanying drawings in which:

Fig. 1 shows a schematic side view of a display device according to a first embodiment;
Fig. 2 shows a schematic side view of a display device according to a second embodiment;
Fig. 3 shows a schematic side view of a display device according to a third embodiment;
Figs. 4 and 5 show front views of display devices with different frame patterns;
Fig. 6 shows a schematic front view of a display device according to a fifth embodiment;
Fig. 7 shows a schematic representation of an auto stereoscopic display in a front view and side view and
Fig. 8 shows general concepts and parameters defining the relationship between depth and disparity.

DETAILED DESCRIPTION OF EMBODIMENTS

In the following, embodiments of the present invention will be described on the basis of a display device for displaying still or moving 2D or 3D images, as an example of a frame device. However, the invention is applicable to all kinds of products or systems where a display area or target area is surrounded by a frame-like non-display area or non-target area.

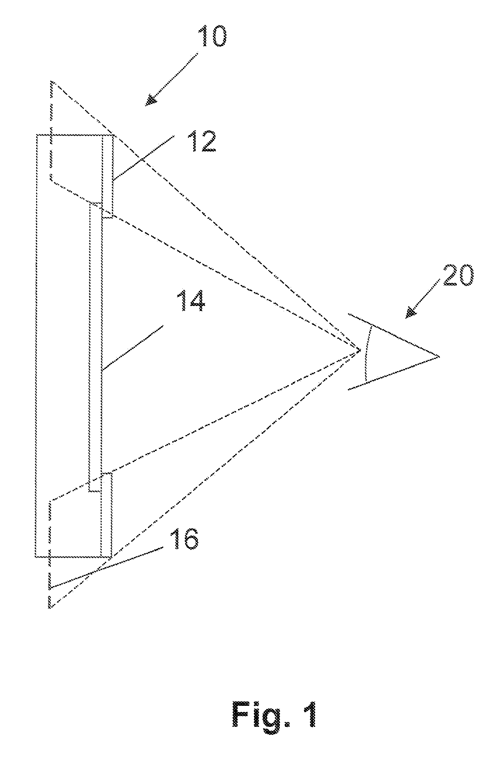

Fig. 1 shows a schematic side view of a display unit 10 according to a first embodiment. The display unit 10 comprises a frame or housing with a display area 14 to be viewed by a viewer 20 at a certain distance. Any kind of 2D or 3D display technology may be used in the display area 14 (e.g. screen). The display area 14 is surrounded and thereby defined by a front portion of the frame or housing, which corresponds to a non-display area 12 on which auto-

stereoscopic means are provided. The autostereoscopic means comprise a composite image, which may be printed on the non-display area or alternatively on the lenticular foil. The composite image comprises at least two interleaved views. In case two views are provided these may correspond with a left and right eye view. However in case more views are provided, adjacent views are chosen such that they may be used as images for the left and right eye respectively.

The lenticular foil serves to generate at least two views to spatially distinct regions in front of the display unit 10 or display area 14 such that the non-display area 12 appears displaced in a direction substantially perpendicular to the display area 14 when the respective views are observed by the respective eyes of an observer. The views are chosen such that they correspond with an image suitable for a frame, preferably a pattern so as not to distract too much from the display area. As views in adjacent spatial regions correspond with the left and right eye views of an observer, the images used for the views must in this particular embodiment correspond with a depth displaced towards the back of the non-display area 14 compared to that of the actual non-display area. This shifted or displaced appearance is the result of the interaction between the composite image and the lenticular foil.

In the example of the first embodiment shown in Fig. 1, the front portion of the frame of the display unit 10 - and thus the non-display area 12 - is covered by the lenticular foil. This foil contains a large number of small plastic lenses arranged in such a way as to provide the impression to the viewer 20 that the composite image visible through the lenticular foil appears to be provided at some distance behind the lenticular foil. When the lenticular foil is positioned adjacent to the display area 14, an impression is created to the viewer 20 as if he could look behind the display area 14.

In case cylindrical lenses are provided in the non-display area 12 (e.g. lenticular foil), the above described effect is only present in one direction. However, in case spherical lenses are used, the effect can be achieved along two axes, e.g. the vertical and the horizontal axis. This makes the visual effect more realistic. The thickness of the display unit virtually disappears to the viewer 20 and he/she gets the impression that only a very thin upper shell remains. If the display area 14 is surrounded at all sides with the lenticular foil or other kinds of light directing means of similar characteristic, the effect is made complete.

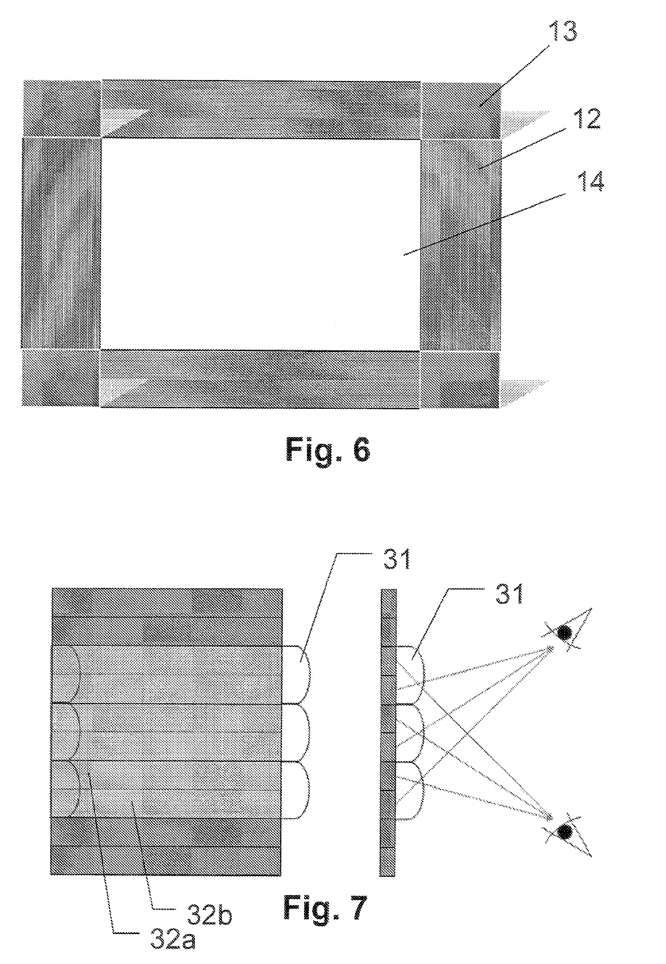

In the following, the principle of stereoscopic depth perception is described in more detail on the basis of Fig. 7.

To enable stereoscopic depth perception of an image or structure, each eye should be provided with a slightly different view of the image or structure. Several technologies have been suggested that allow different images to be provided to each eye. Some of them use special glasses (polarized or shutter glasses, for example). Auto-stereoscopic displays take a different approach. Here, a different image is provided to each eye without the need of special eyewear. As an example, multiview auto-stereoscopic 3D displays have been developed. These displays offer its different views through the use of a film of lenticular lenses in front of a screen.

Fig. 7 shows a schematic representation of such an auto-stereoscopic display in a front view (left part of Fig. 7) and a side view (right part of Fig. 7). In Fig. 7, curved lines represent the lenticular lenses 31. In the example of Fig. 7, two stripes 32a and 32b with different views are placed under each lens 31. However, more than two stripes (e.g. nine stripes) can be placed under each lens 31. Due to the lenses 31 one eye of a viewer will see just the upper stripes 32a in Fig. 7 and the other eye of the viewer will see the lower stripes 32b in Fig. 7. If the right view of an image is placed on the lower stripes 32b in Fig. 7 and the left view on the upper stripes 32a in Fig. 7, the viewer will see two different views and will therefore observe stereoscopic depth.

If such auto-stereoscopic technology is provided in the non-display area 12 of the above embodiment of Fig. 1 and the other embodiments explained later, there is a transition from the auto-stereoscopic frame to the display. If the display is not provided with an auto-stereoscopic technology and is seen by the viewer at the depth where it is actually located, the content of the frame at the edge of the display appears to be vertically displaced with regard to the display area 14 and can be virtually shifted towards the back or towards the front of the display area 14 depending on the interaction of the composite image and the light-influencing structure and/or pattern on the non-display area 12, to thereby provide the above visual effect described in connection with the first embodiment of Fig. 1.

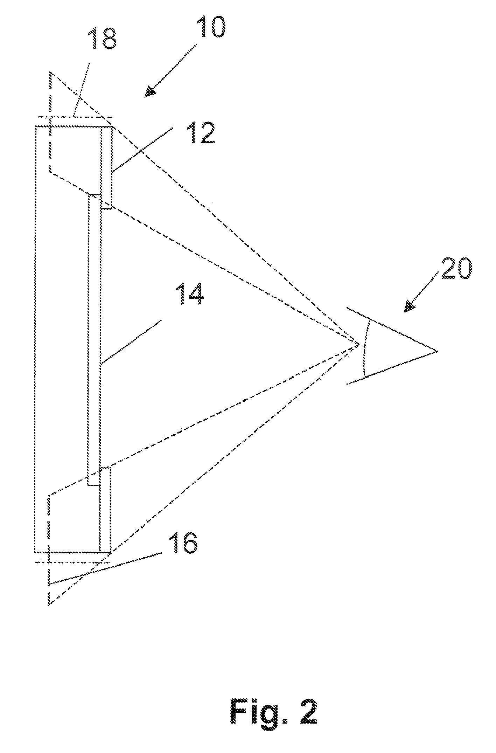

However, in the first embodiment of Fig. 1, side portions of the display unit 10 are still visible to the viewer 20 viewing from an angle. This visibility is prevented in the second embodiment of Fig. 2.

Fig. 2 shows a display unit 10 similar to the display unit of Fig. 1, wherein the visual thinning effect of the display area 14 is further improved by mounting mirrors 18 on or above the side portions of the frame or housing, for example perpendicular to the wall of the side portions to minimize distortion of the mirrored pattern. When the display unit 10 is mounted to a wall, and observed from the front side under an angle, the mirrors will reflect the wall and thus give the impression that the encapsulating housing of the virtually floating and sheet-like appearing display area 14 has no thickness. Thereby, the thinning effect also works well when the viewer 20 looks towards the display unit 10 under an angle.

However, when the viewer 20 moves in front of the display unit 10 and looks at the display area 14 parts of the pattern at the outer boundary of the lenticular foil on the non-display area 12 appear and disappear, which can make the thinning effect less realistic.

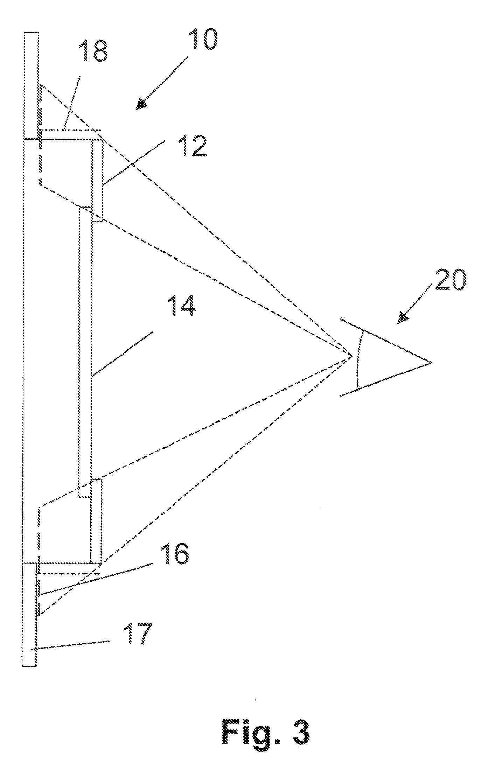

Therefore, in a third embodiment shown in Fig. 3, the backplane of the housing of the display unit 10 and the mirror coated side portions are combined.

Fig. 3 shows a display unit 10 similar to the display units of Figs. 1 and 2, wherein the additional mirrors 18 at the side portions are provided and extended backplane portions 17 are added with a front side surface level which substantially coincides with the displaced level of the imaginary pattern 16. The extended backplane portions 17 may be printed or structured with the same pattern as the imaginary pattern 17, wherein its frontal surface is aligned with the level or depth of the imaginary pattern 16 and wherein its printed pattern is aligned with the structural pattern of the imaginary pattern 16 with regard to position and direction, so that the following special effects can be realized. An impression can be generated to the viewer 20 that the imaginary pattern 16 and the extended backplane portions 17 are the same part. This can prevent the appearing and disappearing of parts of the pattern at the outer boundary of the lenticular foil when the viewer 20 moves, so that the desired thinning effect becomes even more realistic.

It is noted that the mirrors 18 not necessarily have to be combined with the extended backplane portions 17. However, if both are combined, the desired thinning effect can be optimized when the imaginary pattern 16 and the pattern of the extended backplane portions 17 have a symmetry axis in the location where they intersect with the mirrors 18. Then, the pattern on the extended backplane portions 17 and the mirrored reflection will seamlessly join and the mirrors 18 are hardly detectable.

In the third embodiment, the imaginary plane created by the lenticular foil on the non-display area 12 merges with a rear plane with the same pattern provided by the extended backplane portions 17. By adding the mirrors 18 at the side portions this merging also works when the viewer 20 looks to the display area 14 under an angle, and the side portions of the display unit 10 separating imaginary and rear plane are no longer visible. As an alternative, the lenticular foil or other kinds of light directing means may (also) be positioned adjacent to the display unit 10, so that the side portions of the display unit 10 also appear very thin. Then, a rear plane with the same pattern can be positioned behind the lenticular foil, protruding the lenticular foil at all (outer) sides. In this case, no mirrors 18 are needed to cover the sides of the display unit 10.

According to a fourth embodiment, additional light effects may be provided. In this case, the composite image and the lenticular foil or other kind of light directing means provided on the non-display area 12 are semi-transparent. For example the composite image may be printed on the lenticular foil, or may be printed on a transparent foil and combined with the lenticular foil. The combination of the composite image and lenticular foil is semi-transparent and may be mounted on a light generating unit (not shown). In this way, the views provided can be made light emitting. Optionally, extra effects can be realized by changing color and/or brightness of the light generating unit. In this way ambient light effects can be realized in combination with the imaginary floating and thinned display, so that the display area 14 appears to the viewer 20 as a floating display foil in the front of a patterned plane that adapts its color and brightness to the picture content. As an example for such a realization, the lenticular foil or other kind of light directing means can be mounted on top of the active frame provided in display units with integrated ambient light effects, where color and brightness of the frame portion is controlled based on a content of a displayed picture or movie.

The pattern used with the lenticular foil or other kind of light directing means could be adapted to constantly repeat in both directions of the non-display area 12 to thereby prevent disturbances in the imaginary pattern 16.

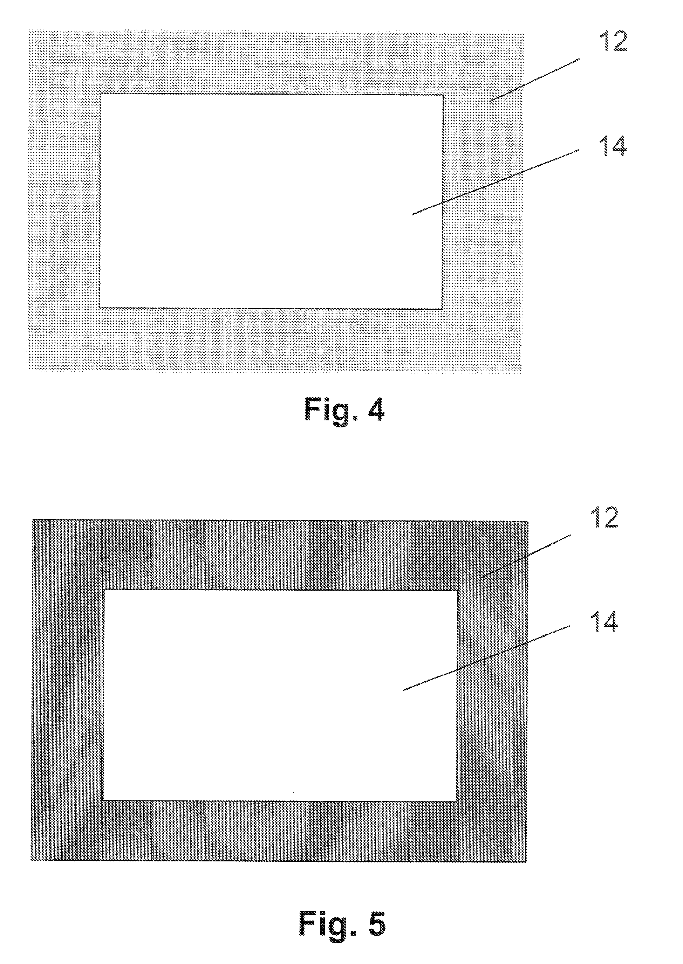

Figs. 4 and 5 show examples of possible patterns provided in the non-display area 12.

In the example of Fig. 4, isolated symbols that are constantly repeated are shown. In the example of Fig. 5, a vertical line pattern is provided all over the non-display area 12. The color of the symbols or line patterns and the background can be freely chosen. Multicolor patterns are also possible.

Fig. 6 shows a pattern example according to a fifth embodiment, where the direction of the line patterns in the non-display area 12 changes from the horizontal direction to the vertical direction. If the change of the direction of the lines of the line pattern is done at a visible location, non-realistic effects are created. To prevent such non-realistic effects, areas where the directions of lines changes can be covered by respective cover portions 13. In Fig. 6, these cover portions 13 are provided at the four corners of the display frame, where the horizontal and vertical line patterns cross each other.

In the following sixth embodiment, the light directing means (e.g. lenticular sheet) on the non-display area 12 are used to reduce the initially described cue conflict in cases where a 3D content of the display area 14 is stuck to the frame portion provided by the non-display area 12. As indicated hereinabove the goal is to displace the non-display area towards the viewer, by providing autostereoscopic means for the non-display area that reduce the probability that objects get "stuck" to the non-display area, by effectively displacing the perceived non-display area towards the user.

When an object in 3D space is displayed on the 3D display area it appears to be closer to the viewer than the actual screen area. However, when such an object is located near the non-display area; typically the display border, then a conflict arises. Although the stereopsis cue indicates it is nearby; this nearby object appears occluded by a further remote display border.

In order to ameliorate this situation it is proposed to use autostereoscopic means to displace the perceived non-display area towards the user compared to the location of the non-display area. Thus, in the sixth embodiment, stereoscopic depth perception is provided in the display area 14 and also in the non-display area 12.

The non-display area 12 may be provided without a repetitive pattern. The human visual system will interpret the views received by the autostereoscopic means, and will perceive the display border to be closer to him than it actually is.

In the sixth embodiment, the patterns shown in Figs. 4 and 5 may thus be provided and configured in a manner to shift the imaginary pattern 16 closer to the viewer 20 using the same principles as described above and in connection with Fig. 7.

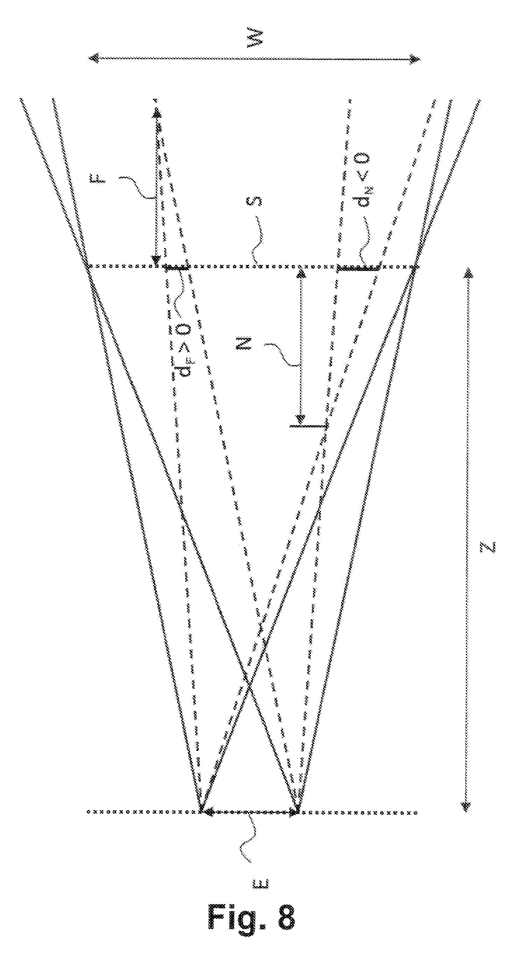

In order to better understand the invention, the relationship between depth and disparity is discussed with reference to Fig. 8. Depth here is intended to signify the perceived distance between an observer and images on a screen. Disparity in turn is relates to the apparent displacement of objects within an image, dependent on their distance.

Fig. 8 illustrates several general concepts and parameters related to depth and disparity. Fig. 8 shows two viewpoints corresponding with an observer's left and right eye located at the edges of the double arrow E, spaced apart by eye-distance E. At a viewing distance Z, a screen S, represented by a dotted line, is located which is used for displaying three dimensional information.

The screen S here is placed at zero disparity. At zero disparity the left and right eye images are identical. The screen S has a width W. An autostereoscopic display typically can display only a limited depth range, here indicated by N (near) which represents the maximum perceived depth in front of the screen S and F (far) which represents the maximum perceived depth behind the screen S.

The line $d_N$ represents the perceived disparity of an object located at N in front of the screen S, the disparity value $d_N$ here is referred to as crossed disparity and can be expressed as:

$$d_N = N\,E/\,(Z\text{-}N) \qquad\qquad [1]$$

Thus in order to provide an impression to a user that an object is located at N in front of the screen S, the disparity between the respective left and right images must be $d_N$. In case the object or pattern that needs to be represented is to be located in front of the screen, such as e.g. the non-display area in the sixth embodiment.

The line $d_F$ represents the perceived disparity of an object located at F behind the screen S, the disparity value $d_F$ here is referred to as un-crossed disparity, and can be expressed as:

$$d_F = F\,E\,/\,(Z\text{+}F) \qquad\qquad [2]$$

Thus in order to provide an impression to a user that an object is located at F behind the screen S, the disparity between the respective left and right images must be $d_N$.

It is noted that although it is possible to displace the non-display area in the sixth embodiment towards the user such that the non-display area is positioned as close as possible to the viewer, this may not always be preferable to position halfway between the screen S and the position N, as this will somewhat ameliorate the problem of objects sticking to the non-display area, yet still enables objects to "jump" out at the viewer in a surprising manner.

It will be clear to the skilled person that particularly in case of the sixth embodiment presented above, the lenticular applied to the display area and that applied to the non display area need not be the same. In fact due to the fact that the autostereoscopic means in the non-display area are typically static, and the composite image will typically be printed, it is preferred to use different lenticulars and differently interleaved composite images for the display area and the non display area.

In further embodiment, the autostereoscopic means are formed as a detachably mounted autostereoscopic unit. As a result the autostereoscopic unit may be detached and subsequently replaced by a new detachable autostereoscopic unit, having e.g. a different pattern and/or a different displacement in order to better accommodate user requirements.

Such a detachable autostereoscopic unit for use with a display device comprises a composite image comprising at least two interleaved images, light directing means for providing at least two views corresponding to the two interleaved images to spatially distinct regions in front of said autostereoscopic detachable unit such that said autostereoscopic detachable unit appears displaced in a direction substantially perpendicular to said detachable autostereoscopic unit when said two views are observed by the respective eyes of an observer and attachment means for detachably mounting the detachable autostereoscopic unit to the display device.

In summary, a display device or display device and a method for creating a floating display or enhancing 3D experience at borders of a display have been described, wherein a 3D lenticular sheet or other light directing structure is added on the frame of the display such that the frame of the display appears to be at a different position in front of or behind the display. Thereby, the artifact that depth impression on a 3D display disappears when the 3D content touches the frame of the display can be reduced or the impression of a thin floating display can be achieved.

It is noted that the present invention is not restricted to the above embodiments and can be used for any product where a target area is to be subjected to the visual effects described above in connection with the first to sixth embodiments. The invention can thus be applied to any kind of display devices (TVs, computer monitors, photo or image frame products etc.) or even to totally different products with surfaces to be made thinner or to appear floating. Any kind of light directing means may be provided in the non-display area 12 to generate the displays imaginary pattern 16. Examples for such light directing means and corresponding 3D techniques and technologies are described for example in P. Benzie et al., "A Survey of 3DTV Displays: Techniques and Technologies", IEEE TRANSACTIONS ON CIRCUITS AND SYSTEMS FOR VIDEO TECHNOLOGY, Vol. 17, No. 11, November 2007. Moreover, any kind of shape of the non-display area 12 and display area 14 can be provided. Information on placement of lenticular screens as well as the view interleaving can be found in e.g. International Application WO 1999005559.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate.

Variations to the disclosed embodiments can be understood and effected by those skilled in the art, from a study of the drawings, the disclosure and the appended claims. In the claims, the wording "comprising" does not exclude other elements or steps, and the indefinite article "a" or "an" does not exclude a plurality of elements or steps. The mere effect that certain measures are recited in mutually different dependent claims does not indicate that a combination of these measures cannot be used to advantage. Any reference signs in the claims should not be construed as limiting the scope thereof.

**Claims**

1.  A display device comprising a display area (14), said display device further comprising a non-display area (12) adjacent to said display area (14), wherein said non-display area (12) is provided with autostereoscopic means, the autostereoscopic means comprising a composite image, the composite image comprising at least two interleaved views, and light directing means for providing the at least two views to spatially distinct regions in front of said display area (14) such that said non-display area (12) appears displaced in a direction substantially perpendicular to said display area (14) when said two views are observed by the respective eyes of an observer.

2.  The display device according to claim 1, wherein said display area (14) is configured to generate a three-dimensional image.

3.  The display device according to claim 1, wherein said display area (14) is configured to generate a two-dimensional image.

4.  The display device according to claim 1, wherein said light directing means are configured to provide said at least two views in a manner so that said non-display area (12) appears displaced towards the back of said display area (14) compared to the actual position of said non-display area (12).

5.  The display device according to claim 1 or 2, wherein said light directing means is configured to provide said at least two views in a manner so that said non-display area (12) appears displaced towards the front of said display area (14) compared to the actual position of said non-display area (12).

6.  The display device according to claim 1, wherein said composite image comprises views of at least one of a texture and a pattern.

7.  The display device according to claim 1, wherein said light directing means comprises one of a lenticular foil (12) and a parallax barrier.

8.  The display device according to claim 1, wherein said light directing means comprise the lenticular foil (12), and wherein the composite image and the lenticular foil (12) are semi-transparent and are mounted on a light emitting portion.

9. The display device according to claim 1, further comprising mirrors (18) provided at side portions of said frame device (10).

10. The display device according to claim 1, further comprising extended backplane portions (17) arranged in a plane substantially parallel to said non-display area (12) and extending beyond said non-display area (12), wherein said plane is displaced in said direction substantially perpendicular to said display area (14) by an amount at least substantially equal to the amount by which said non-display area (12) appears displaced as a result of said light directing means.

11. The display device according to claim 10, wherein said extended backplane portions (17) comprise a pattern at least substantially equal to a pattern which appears on said displaced non-display area.

12. The display device according to claim 1, further comprising cover portions (13) for covering areas of said non-display area (12), in which the direction of patterns of said light directing means changes.

13. The display device according to anyone of the previous claims, wherein the autostereoscopic means are formed as a detachably mounted autostereoscopic unit.

14. A detachable autostereoscopic unit for use with a display device comprising:

- a composite image comprising at least two interleaved images,
- light directing means for providing at least two views corresponding to the two interleaved images to spatially distinct regions in front of said autostereoscopic detachable unit such that said autostereoscopic detachable unit appears displaced in a direction substantially perpendicular to said detachable autostereoscopic unit when said two views are observed by the respective eyes of an observer and
- attachment means for detachably mounting the detachable autostereoscopic unit to the display device.

15. Use of a detachable autostereoscopic unit as claimed in claim 14 in combination with a display device for guiding observer perception when said detachable autostereoscopic unit is mounted to said display device, such that an observer perceives the location of the detachable autostereoscopic unit as displaced in a direction substantially perpendicular to a display area (14) of the display device.

16. A frame device for defining a display area (14), said frame device (10) further comprising a non-display area (12) adjacent to said display area (14), wherein said non-display area (12) is provided with autostereoscopic means, the autostereoscopic means comprising a composite image, the composite image comprising at least two interleaved views, and light directing means for providing the at least two views to spatially distinct regions in front of said display area (14) such that said non-display area (12) appears displaced in a direction substantially perpendicular to said display area (14) when said two views are observed by the respective eyes of an observer.

17. A display device comprising a display area (14), said display device comprising a non-display area (12) adjacent to said display area (14), wherein said non-display area (12) is provided with light directing means for providing at least two views to spatially distinct regions in front of said display area (14) such that said non-display area (12) appears displaced in a direction substantially perpendicular to said display area (14) when said two views are observed by the respective eyes of an observer.

Fig. 1

**Fig. 2**

**Fig. 3**

Fig. 4

Fig. 5

**Fig. 6**

**Fig. 7**

Fig. 8

Europäisches
Patentamt

European
Patent Office

Office européen
des brevets

# EUROPEAN SEARCH REPORT

Application Number

EP 09 15 1124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 847 870 A (OHTSUKA SAKUICHI [JP]) 8 December 1998 (1998-12-08) * column 4, lines 10-64; figures 3,4a,4b * | 1,2,5-8, 16,17 | INV. G02B27/22 |
| Y | * column 5, lines 9-37 * | 9-11 | ADD. H04N13/00 |
| X | US 5 720 123 A (TAYLOR ROY Y [US]) 24 February 1998 (1998-02-24) * column 1, lines 26-38; figures 1,4-8 * * column 2, lines 26-67 * * column 4, lines 26-59 * * column 5, lines 38-67 * | 1,3, 12-15 | |
| X | US 5 629 796 A (SHANKS IAN A [GB]) 13 May 1997 (1997-05-13) * column 2, line 35 - column 4, line 12; figures 1,3,4 * | 1,3-6, 12-15 | |
| Y | WO 2006/076173 A (PROVITOLA ANTHONY [US]) 20 July 2006 (2006-07-20) * page 8, line 29 - page 9, line 35; figures 13-15 * | 9 | |
| Y | WO 2008/004005 A (ASHBEY JAMES AMACHI [GB]) 10 January 2008 (2008-01-10) * claims 78,82; figures 31-34 * | 10,11 | TECHNICAL FIELDS SEARCHED (IPC) G02B A47G H04N |

The present search report has been drawn up for all claims

| Place of search | Date of completion of the search | Examiner |
|---|---|---|
| Munich | 24 June 2009 | Casse, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 09 15 1124

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2009

| Patent document cited in search report | | Publication date | Patent family member(s) | | Publication date |
|---|---|---|---|---|---|
| US 5847870 | A | 08-12-1998 | NONE | | |
| US 5720123 | A | 24-02-1998 | DE | 69427458 D1 | 19-07-2001 |
| | | | DE | 69427458 T2 | 11-04-2002 |
| | | | EP | 0663603 A1 | 19-07-1995 |
| | | | JP | 7219085 A | 18-08-1995 |
| US 5629796 | A | 13-05-1997 | CA | 2127788 A1 | 22-07-1993 |
| | | | DE | 69330873 D1 | 08-11-2001 |
| | | | DE | 69330873 T2 | 13-06-2002 |
| | | | EP | 0621757 A1 | 02-11-1994 |
| | | | WO | 9313699 A1 | 22-07-1993 |
| | | | JP | 7502838 T | 23-03-1995 |
| WO 2006076173 | A | 20-07-2006 | AU | 2005324379 A1 | 20-07-2006 |
| | | | BR | PI0518498 A2 | 25-11-2008 |
| | | | CA | 2593243 A1 | 20-07-2006 |
| | | | EP | 1836531 A2 | 26-09-2007 |
| | | | JP | 2008527918 T | 24-07-2008 |
| WO 2008004005 | A | 10-01-2008 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1999005559 A

**Non-patent literature cited in the description**

- **P. Benzie et al.** A Survey of 3DTV Displays: Techniques and Technologies. *IEEE TRANSACTIONS ON CIRCUITS AND SYSTEMS FOR VIDEO TECHNOLOGY,* November 2007, vol. 17 (11